# EUROPÄISCHE PATENTSCHRIFT

(11) **EP 1 930 288 B1**
(45) Veröffentlichungstag und Bekanntmachung des Hinweises auf die Patenterteilung: **23.06.2010**
(21) Anmeldenummer: 07022247.6
(22) Anmeldetag: 16.11.2007
(51) Int. Cl.: B66F 9/075, B60K 1/04

(54) **Hubwagen mit Verriegelungsvorrichtung für einen Batterieblock**
Elevating truck with locking device for a battery block
Chariot élévateur avec dispositif de verrouillage pour un bloc de batterie

(30) Priorität: 06.12.2006 DE 102006057490
(43) Veröffentlichungstag der Anmeldung: 11.06.2008
(73) Patentinhaber: Jungheinrich Aktiengesellschaft, 22047 Hamburg (DE)
(72) Erfinder: Schüler, Michael, Dipl.-Ing., 23923 Schönberg (DE)
(74) Vertreter: Graalfs, Edo

(56) Entgegenhaltungen:
- DE-U1- 20 105 883
- FR-A- 2 832 965
- GB-A- 2 183 081

## Beschreibung

Die Erfindung bezieht sich auf einen Hubwagen, in dessen Rahmen ein Batterieträger angeordnet ist zur Aufnahme eines Batterieblocks nach dem Oberbegriff des Patentanspruchs 1.

Ein derartiger Hubwagen ist etwa aus DE 10 2004 047 339 A1 bekannt geworden. Zwei Hebel der Verriegelungsvorrichtung bilden einen Kniehebelverschluß, wobei ein erster Hebel am Rahmen des Fahrzeugs um eine horizontale Achse schwenkbar gelagert ist. Der zweite Hebel ist am ersten Hebel schwenkbar gelagert und weist einen Hakenabschnitt auf, der in der Verriegelungsposition einen Bolzen an der inneren Seitenwand des Batterieblocks hintergreift. In der Entriegelungsposition kann der Batterieblock zu einer Seite horizontal herausbewegt werden. Zur völligen Freigabe muß der erste Hebel in eine erste Entriegelungsposition und danach in eine zweite Entriegelungsposition verschwenkt werden.

Der Erfindung liegt die Aufgabe zugrunde, ein Flurförderzeug mit einer Verriegelungsvorrichtung für einen Batterieblock zu schaffen, bei der ein schneller und einfacher Batteriewechsel möglich ist bei ergonomischer Bedienung ohne Einsatz von Werkzeugen. Die erfindungsgemäße Verriegelungsvorrichtung soll eine Verwendung unmodifizierter Standardbatterien ermöglichen.

Diese Aufgabe wird durch die Merkmale des Patentanspruchs 1 gelöst.

Bei der Erfindung ist ein erster Hebel schwenkbar am Rahmen des Fahrzeugs gelagert, und ein zweiter Hebel ist an den ersten Hebel angelenkt und trägt mindestens einen Puffer. Die Konstruktion ist derart, daß durch Betätigung des ersten Hebels der Puffer mit einer Wand des Batterieblocks, vorzugsweise der Stirnwandinnenseite, in oder außer Eingriff bringbar ist, um die zugehörige Wand bzw. den Batterieblock klemmend gegen einen rahmenfesten Anschlag zu drücken. Erster und/oder zweiter Hebel können in der Verriegelungsposition durch geeignete Mittel lösbar gehalten werden. Die Hebel können einen Kniehebelverschluß bilden, um die Puffer wahlweise gegen den Batterieblock zu klemmen oder freizugeben.

Bei einer Ausgestaltung der Erfindung ist am Batterieträger eine Seitenwand anbringbar, die am oberen Ende ein Lagerbauteil hält. Das Lagerbauteil ist vorzugsweise ein getrenntes Bauteil, das zum Beispiel an der Seitenwand angeschweißt ist. Die Seitenwand kann an einer von beiden freien Endseiten des Batterieträgers angebracht werden, je nach Ausschubrichtung für den Batterieblock.

Das Lagerbauteil weist eine Anschlagfläche auf, gegen welche sich die zugeordnete Stirnwand des Batterieblocks anlegt. Am Lagerbauteil ist der erste Hebel der Verriegelungsvorrichtung schwenkbar gelagert, und der zweite Hebel ist am ersten Hebel so gelagert, daß der Verriegelungsabschnitt in der Verriegelungsposition den oberen Teil der Stirnwand von innen klemmend erfaßt. In der Freigabeposition wird der Verriegelungsabschnitt so weit nach oben verschwenkt, daß der Batterieblock zumindest horizontal von der Seitenwand fort bewegbar ist.

Dadurch, daß der Verriegelungsabschnitt die innere Seitenwand des Batterieblocks, die ohnehin etwas über die Oberseite der Batterie übersteht, erfaßt, braucht der Batterieblock nicht im Hinblick auf die Verriegelung in besonderer Weise hin ausgelegt sein. Daher können unmodifizierte Standardbatterien verwendet werden. Eine Batterieentnahme ist zu beiden Seiten möglich, wobei die Montage der Seitenwand an der entsprechenden Seite des Batterieträgers erfolgt. Die Batterieverriegelung befindet sich somit nicht direkt am Fahrzeugrahmen, sondern an der bereits erwähnten Seitenwand. Der erste Hebel braucht nur in einer Richtung verschwenkt werden, um den zweiten Hebel in die Verriegelungs- bzw. Entriegelungsposition zu bringen. Die Betätigung ist daher ergonomisch und geht auf schnellstem Wege vonstatten.

Nach einer Ausgestaltung der Erfindung ist vorgesehen, daß der Verriegelungsabschnitt mindestens einen Puffer aus elastomerem Material aufweist. Der Puffer legt sich in der Verriegelungsstellung gegen die Innenseite der Stirnwand an und hält die Stirnwand des Batterieblockes gegen die Anschlagfläche im Lagerbauteil. Der Puffer wird unter Druck gesetzt, so daß auf diese Weise für den Kniehebelverschluß eine Vorspannung entsteht.

Nach einer anderen Ausgestaltung der Erfindung ist ein Lagerstift für die Lagerung des zweiten Hebels am ersten ein bogenförmiger Schlitz im Lagerbauteil vorgesehen, in dem der Lagerstift geführt ist. Das Lagerbauteil kann nach einer weiteren Ausgestaltung der Erfindung einen Begrenzungsabschnitt aufweisen, gegen den ein Anschlagabschnitt des zweiten Hebels in Eingriff kommt, wenn der zweite Hebel in die Freigabestellung verschwenkt wird. Zu diesem Zweck kann nach einer weiteren Ausgestaltung der Erfindung der Begrenzungsabschnitt einen Haken und der Anlageabschnitt einen Anlagestift aufweisen. Dadurch wird ein Überschwenken des ersten Hebels bei der Bewegung in die Freigabeposition verhindert.

Nach einer weiteren Ausgestaltung der Erfindung ist am Lagerbauteil ein Führungsabschnitt vorgesehen, der im Schwenkbereich nahe der Freigabeposition mit einer Führungsfläche des zweiten Hebels zusammenwirkt, um den Verriegelungsabschnitt frei über die obere Kante der Stirnwand zu verschwenken. Mit Hilfe einer derartigen Vorkehrung läßt sich der zweite Hebel so weit nach oben verschwenken, daß der Batterieblock ohne weiteres aus dem Batterieträger herausbewegt werden kann.

Bei einer konstruktiven Ausgestaltung der Erfindung weist nach einer weiteren Ausgestaltung der Erfindung der zweite Hebel einen winkligen Backenabschnitt auf, an dem der Verriegelungsabschnitt, zum Beispiel der Puffer, angebracht ist. Zwei parallel beabstandete Hebelarme können mit zwei parallel beabstandeten Hebelarmen des ersten Hebels schwenkbar verbunden sein.

Vorzugsweise weist ein vertikaler Schenkel des Backenabschnitts zwei seitlich beabstandete Puffer auf, die jeweils einer Anlagefläche des Lagerbauteils zugekehrt sind.

Um ein Hochrutschen des Backenabschnitts und damit ein Lösen der Verriegelung zu verhindern, kann nach einer weiteren Ausgestaltung der Erfindung ein vertikaler Teil des Backenabschnitts annähernd mittig einen Begrenzungsstift aufweisen, der in der Verriegelungsposition in Richtung Stirnwand weist und der mit einer Transportöffnung der Stirnwand in Eingriff gelangt. Derartige Transportöffnungen sind bei Standardbatterieblöcken vorhanden, um diese mit Hilfe eines Hebezeugs anheben und fortbewegen zu können.

Ein Ausführungsbeispiel der Erfindung wird nachfolgend anhand von Zeichnungen näher erläutert.
- Fig. 1: zeigt perspektivisch einen Batterieträger mit einem Batterieblock und einer Verriegelungsvorrichtung nach der Erfindung in der Verriegelungsstellung.
- Fig. 2: zeigt die gleiche Ansicht wie Fig. 1 mit der Verriegelungsvorrichtung in der Entriegelungsposition.
- Fig. 3: zeigt perspektivisch eine Seitenwand mit einem Lagerbauteil für eine Verriegelungsvorrichtung nach der Erfindung.
- Fig. 4: zeigt perspektivisch das Lagerbauteil mit der Verriegelungsvorrichtung nach der Erfindung.
- Fig. 5: zeigt die Seitenansicht der Anordnung nach Fig. 4.
- Fig. 6: zeigt die Verriegelungsvorrichtung nach Fig. 4 und 5 nahe der Entriegelungsposition.
- Fig. 7: zeigt die Darstellung nach Fig. 6 in der Entriegelungsposition.

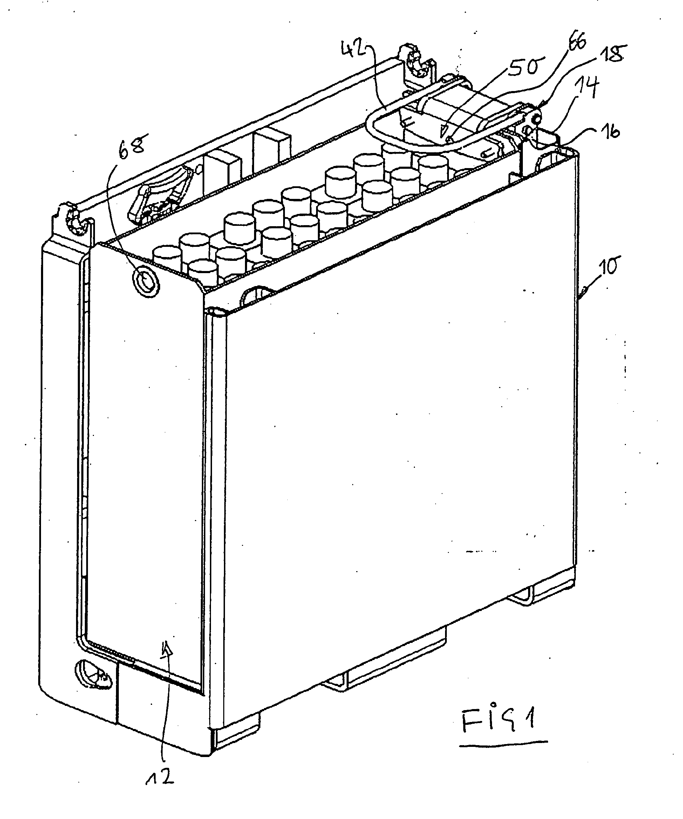

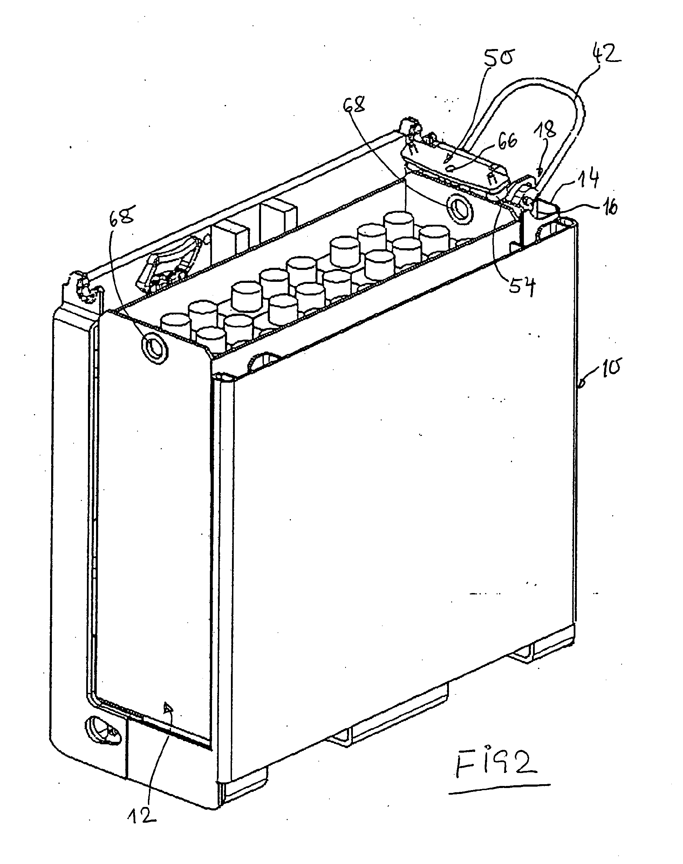

In den Figuren 1 und 2 ist ein Batterieträger 10 dargestellt, der im Rahmen eines nicht weiter dargestellten Hubwagens angeordnet ist. Der Batterieträger 10 nimmt einen Batterieblock 12 auf, der Stirnwände und Seitenwände hat. Wie erkennbar, kann der Batterieblock 12 zur in den Figuren 1 und 2 linken Seite des Batterieträgers 10 bewegt werden. Die andere Stirnseite des Batterieträgers 10 ist von einer Seitenwand 14 abgeschlossen, die zum Beispiel an den Batterieträger angeschraubt ist. Wahlweise kann die Seitenwand 14 auch an der in den Figuren 1 und 2 offenen Seite des Batterieträgers 10 verschraubt werden.

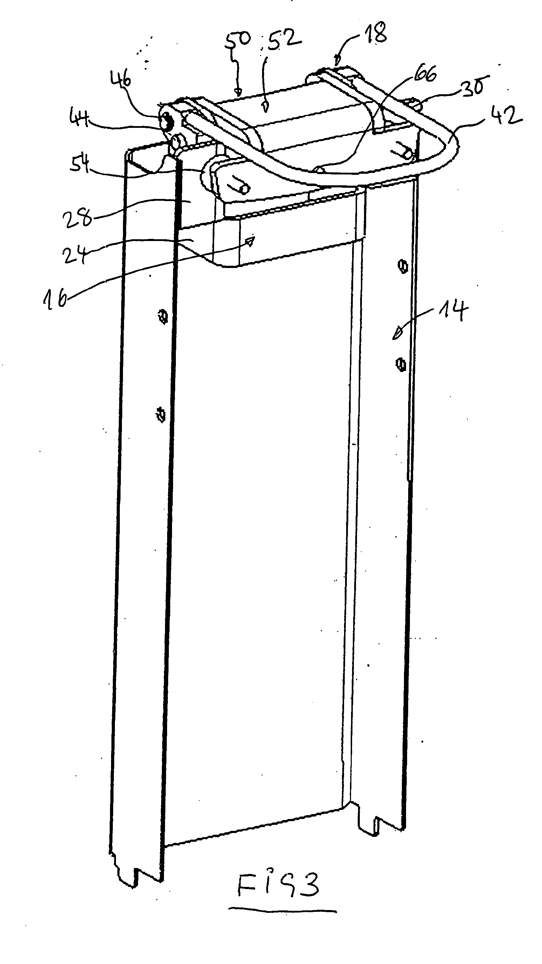

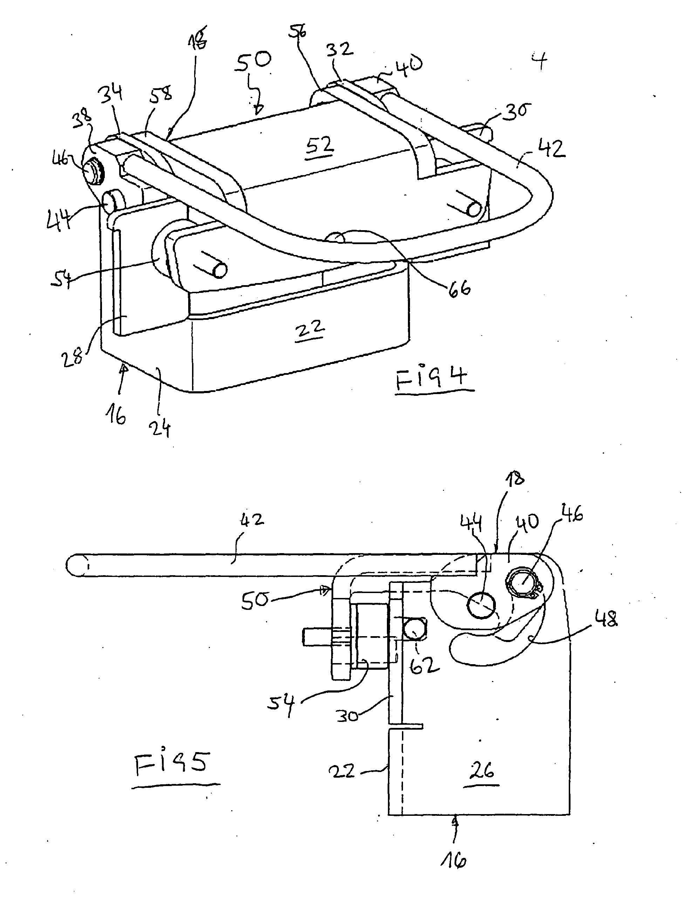

Die Seitenwand 14 trägt am oberen Ende ein Lagerbauteil 16 (Fig. 3) für eine Verriegelungsvorrichtung 18, die in Verbindung mit den Figuren 4 bis 7 nachfolgend näher beschrieben werden soll. Wie in Fig. 3 zu erkennen, ist die Seitenwand 14 im Querschnitt U-förmig. Das Lagerbauteil 16 ist zwischen den Schenkeln des U-Profils und der Innenseite des Stegabschnitts angebracht, beispielsweise durch Verschweißung. Dies ist jedoch im einzelnen nicht dargestellt.

Das Lagerbauteil, wie es in den Figuren 4 bis 7 zu erkennen ist, weit ein U-Profil aus mit einer Vorderwand 22, die niedriger ist als Seitenwände 24, 26, die zur Seite abgebogene Anschlagabschnitte 28, 30 bilden. An einwärts gebogenen Abschnitten 32, 34 der Seitenwände 24, 26 sind Lagerabschnitte 38, 40 eines ersten bügelartigen Hebels 42 angelenkt, und zwar mit Hilfe eines Lagerstifts 44. Mit Hilfe des Lagerstifts 44 kann der Hebel 42 um eine horizontale Achse am Lagerbauteil 16 verschwenkt werden. Im Abschnitt 38 befindet sich außerdem ein Lagerbolzen 46, der in einen bogenförmigen Schlitz 48 der Lagerabschnitte 38, 40 eingreift und über den ein zweiter Hebel 50 am ersten Hebel 42 angelenkt ist. Der Schlitz 48 bildet Endlagenanschläge für die Hebelbetätigung. Der zweite Hebel 50 weist einen winkelförmigen Backenabschnitt 52 auf mit einem in der Position nach Fig. 3 horizontalen und einem vertikalen Abschnitt. Der vertikale Abschnitt ist zu beiden Seiten hin ohrenartig verlängert, und an diesen Verlängerungen sitzen Gummipuffer 54. Wie in den Figuren 4 und 5 zu erkennen, wirken die Gummipuffer 54 mit den Anschlagabschnitten 28, 30 des Lagerbauteils 16 zusammen. Zu beiden Seiten des horizontalen Abschnitts des Backenabschnitts 52 sind Hebelarme 56, 58 vorgesehen, welche mit den Lagerbolzen 46 zusammenwirken.

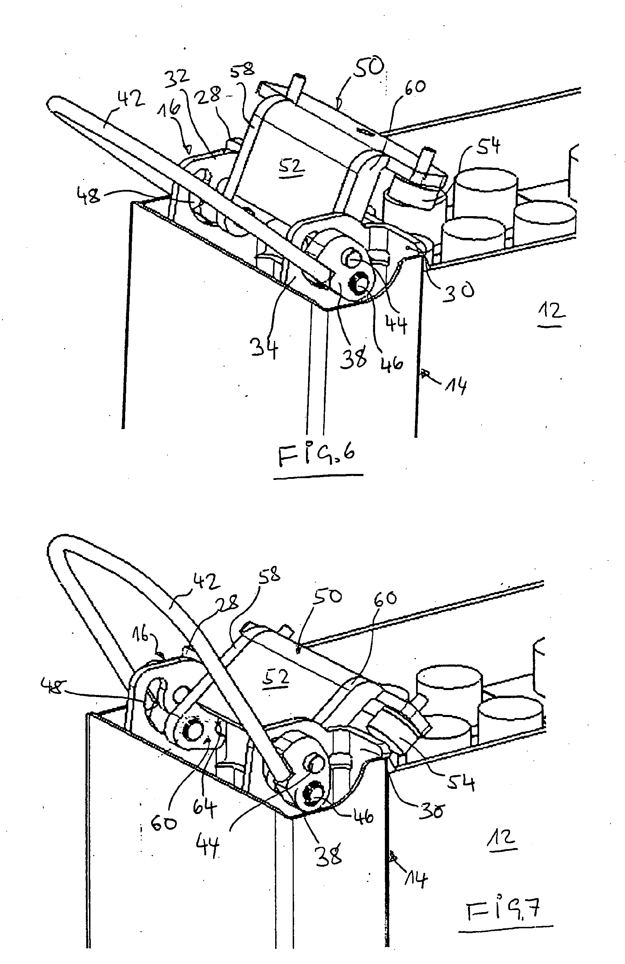

Wie bei 60 in Figur 7 zu erkennen, weisen die Hebelarme 56, 58 am inneren Abschnitt Hakenabschnitte auf, die mit einem Anschlagstift zusammenwirken. Die Hebelarme 56, 58 haben darüber hinaus eine Rampenfläche 64, welche mit dem Stift zusammenwirkt zwecks Führung des zweiten Hebels 50.

Erster und zweiter Hebel 42, 50 wirken wie ein Kniehebelverschluß zusammen. In einer Verriegelungsposition, wie sie in den Figuren 4 und 5 dargestellt ist, liegen die Achsen der Lagerstifte 44, 46 in der Höhe versetzt zueinander. Da die Puffer 54 gegen die Abschnitte 28, 30 wirken, erzeugen diese eine Vorspannung bei Überschreiten des Totpunktes, wenn der Hebel 42 von einer angehobenen in die in den Figuren 4 und 5 dargestellte horizontale Verriegelungsposition verschwenkt wird.

In der Verriegelungsposition gemäß den Figuren 4 und 5 bzw. 1 greifen die Puffer 54 von innen gegen eine Stirnwand des Batterieblocks 12 (nicht dargestellt). In den Figuren 6 und 7 ist der Batterieblock 12 angedeutet. Bekanntlich stehen Wandabschnitte des Batterieblocks 12 nach oben über die aufgenommene Batterie über. Die Puffer 54 greifen daher auf die Innenseite der Stirnwand oben an, um gemäß Figuren 4 und 5 den Batterieblock 12 in dieser Position gegen die Anschlagabschnitte 28, 30 zu halten und zu verriegeln. In der Verriegelungsposition greift außerdem ein Stift 66 an der Innenseite des vertikalen Backenabschnitts 52 in ein Loch 68 (siehe Figuren 1 und 2), das zu Transportzwecken am oberen Rand der Stirnwände des Batterieblocks 12 geformt ist. Der Stift 66 steht nicht mit der Batterie in Eingriff, vielmehr soll er nur ein Hochrutschen des Hebels 50 verhindern und damit ein Lösen der Verriegelung.

Wird der Hebel 42 in die Öffnungsstellung verschwenkt, verschwenkt sich auch der zweite Hebel 50, und die Puffer 54 werden über den Rand des Batterieblocks 12 geschwenkt, wie dies in Figuren 6 und 7 dargestellt ist. Fig. 6 zeigt eine Verschwenkung des Hebels 42 gegenüber der Verriegelungsposition nach den Figuren 4 und 5 um 120°, während in Fig. 7 eine Verschwenkung um 140° stattgefunden hat. In dieser endgültigen Entriegelungsposition liegt der Hakenabschnitt 60 am Anschlagstift 62 (Fig. 5), so daß ein weiteres Öffnen nicht möglich ist. Die Schwenkposition des zweiten Hebels 50 ist jedoch so, daß die Batterie nicht nur seitlich herausbewegt werden kann, sondern auch nach oben. Die Puffer 54 sind dabei nicht mehr im Wege.

Damit der zweite Hebel 50 die beschriebene Verschwenkung in die Entriegelungsposition vornehmen kann, wirkt der Rampenabschnitt 64 der Hebelarme 56, 58 in gewünschter Weise mit dem Anschlagstift 62 zusammen, der hier eine Führung bildet.

## Patentansprüche

1. Flurförderzeug, in dessen Rahmen ein Batterieträger angeordnet ist, in den ein Batterieblock hinein- oder aus diesem heraus bewegbar ist, wobei eine zwei zusammenwirkende Hebel aufweisende Verriegelungsvorrichtung vorgesehen ist, welche den Batterieblock im eingebauten Zustand gegenüber dem Rahmen bzw. einem Batterieträger lösbar verriegelt, **dadurch gekennzeichnet, daß** die Vorrichtung zum Verriegeln des Batterieblocks mindestens einen ersten Hebel (42) aufweist, der um eine fahrzeugfeste Achse gelagert ist sowie mindestens einen zweiten Hebel (50), der am ersten Hebel (42) schwenkbar gelagert und so ausgeführt ist, daß er mindestens eine Wandfläche des Batterieblocks mit Hilfe mindestens eines Puffers (54) klemmend erfaßt.

2. Flurförderzeug nach Anspruch 1, **dadurch gekennzeichnet, daß** erster und zweiter Hebel einen Kniehebelverschluß bilden, bei dem der erste Hebel über den Totpunkt des Kniehebelverschlusses verschwenkt ist, wenn der zweite Hebel in der Verriegelungsposition ist, daß an einem Ende des Batterieträgers (10) eine Seitenwand (14) anbringbar ist, die am oberen Ende ein Lagerbauteil (16) hält, an dem der erste Hebel (42) schwenkbar gelagert ist, das Lagerbauteil (16) eine Anschlagfläche (28, 30) aufweist, der zweite Hebel (50) am Lagerbauteil (16) so geführt ist, daß der Verriegelungsabschnitt in der Verriegelungsposition den oberen Teil der Stirnwand von innen klemmend erfaßt und in der Freigabeposition so weit nach oben verschwenkt ist, daß der Batterieblock (12) zumindest horizontal von der Seitenwand (14) fort bewegbar ist.

3. Flurförderzeug nach Anspruch 1 oder 2, **dadurch gekennzeichnet, daß** der mindestens eine Puffer (54) aus elastomerem Material besteht.

4. Flurförderzeug nach einem der Ansprüche 1 bis 3, **dadurch gekennzeichnet, daß** ein Lagerstift (46) für die Lagerung des zweiten Hebels (50) in einen bogenförmigen Schlitz (48) des Lagerbauteils (16) eingreift.

5. Flurförderzeug nach einem der Ansprüche 1 bis 4, **dadurch gekennzeichnet, daß** das Lagerbauteil (16) einen Begrenzungsabschnitt (62) aufweist, gegen den ein Anschlagabschnitt des zweiten Hebels (50) in Eingriff kommt, wenn der zweite Hebel (50) in die Freigabeposition verstellt wird.

6. Flurförderzeug nach Anspruch 5, **dadurch gekennzeichnet, daß** der Begrenzungsabschnitt ein Hakenabschnitt (60) und der Anschlagabschnitt ein Anschlag- oder Begrenzungsstift (62) ist.

7. Flurförderzeug nach einem der Ansprüche 1 bis 6, **dadurch gekennzeichnet, daß** am Lagerbauteil (16) ein Führungsabschnitt vorgesehen ist, der in einem Schwenkbereich des zweiten Hebels nahe der Freigabeposition mit einer Führungsfläche des zweiten Hebels (50) zusammenwirkt, um den Verriegelungsabschnitt frei über die obere Kante der Stirnwand des Batterieblocks zu schwenken.

8. Flurförderzeug nach einem der Ansprüche 1 bis 7, **dadurch gekennzeichnet, daß** der zweite Hebel (50) einen winkligen Backenabschnitt (52) aufweist, an dem der Verriegelungsabschnitt angebracht ist und der zwei parallel beabstandete Hebelarme (56, 58) aufweist, die parallel an parallel beabstandeten Hebelarmen des ersten Hebels (50) angelenkt sind.

9. Flurförderzeug nach Anspruch 1 und 8, **dadurch gekennzeichnet, daß** am vertikalen Schenkel des Backenabschnitts (52) zwei seitlich beabstandete Puffer (54) angebracht sind, die mit jeweils einer Anschlagfläche (28, 30) des Lagerbauteils (16) zusammenwirken.

10. Flurförderzeug nach Anspruch 8 oder 9, **dadurch gekennzeichnet, daß** der vertikale Teil des Backenabschnitts (52) annähernd mittig sich in Richtung der Anschlagfläche erstreckenden Begrenzungsstift (66) angeordnet ist, der in eine Transportöffnung (68) der Stirnwand des Batterieblocks (12) eingreift, wenn der zweite Hebel (50) in der Verriegelungsposition ist.

## Claims

1. Ground conveyor, in the frame of which a battery mount is arranged, into which a battery block can be moved in or out, wherein a locking device with two cooperative levers is provided, which locks in a releasable manner the battery block in the installed state with respect to the frame or a battery mount, **characterized in that** the device for locking the battery block has at least one first lever (42), which is mounted on a vehicle-proof axis and at least one second lever (50), which is swivel-mounted on the first lever (42) and is designed such that it clamps onto at least one wall surface of the battery block with the help of at least one buffer (54).

2. Ground conveyor according to claim 1, **characterized in that** the first and second levers form a toggle lever lock, in which the first lever is pivoted over the dead center of the toggle lever lock, when the second lever is in the locked position, that a side wall (14) can be attached on one end of the battery mount (10), which holds on the upper end a bracket component (16), on which the first lever (42) is swivel mounted, the bracket component (16) has a stop surface (28, 30), the second lever (50) on the bracket component (16) is guided such that the locking portion in the locked position clamps onto the upper part of the front wall from the inside and is pivoted in the released position so far upwards that the battery block (12) can be moved at least horizontally away from the side wall (14).

3. Ground conveyor according to claim 1 or 2, **characterized in that** the at least one buffer (54) is made of an elastomer material.

4. Ground conveyor according to one of claims 1 through 3, **characterized in that** a bracket pin (46) for mounting the second lever (50) engages with a curved slit (48) of the bracket component (16).

5. Ground conveyor according to one of claims 1 through 4, **characterized in that** the bracket component (16) has a boundary portion (62), against which a stop portion of the second lever (50) engages when the second lever (50) is set to the released position.

6. Ground conveyor according to claim 5, **characterized in that** the boundary portion is a hook section (60) and the stop portion is a stop or boundary pin (62).

7. Ground conveyor according to one of claims 1 through 6, **characterized in that** a guide portion is provided on the bracket component (16), which in a pivot area of the second lever near the released position works together with a guide surface of the second lever (50) in order to pivot the locking portion freely over the upper edge of the front wall of the battery block.

8. Ground conveyor according to one of claims 1 through 7, **characterized in that** the second lever (50) has an angular jaw portion (52), on which the locking portion is attached and which has two parallely spaced lever arms (56, 58), which are coupled parallely with parallely spaced lever arms of the first lever (50).

9. Ground conveyor according to claims 1 and 8, **characterized in that** two laterally spaced buffers (54) are attached to vertical legs of the jaw portion (52), each of which work together with one stop surface (28, 30) of the bracket component (16).

10. Ground conveyor according to claim 8 or 9, **characterized in that** the vertical part of the jaw portion (52) is arranged almost in the center of the boundary pin (66) extending in the direction of the stop surface, which engages with a transport opening (68) of the front wall of the battery block (12) when the second lever (50) is in the locked position.

## Revendications

1. Chariot élévateur dans le cadre de châssis duquel est disposé un support de batterie, vers l'intérieur duquel ou au dehors duquel un bloc de batterie peut être transporté, un dispositif de verrouillage ayant deux leviers coopérants étant pourvu qui verrouille le bloc de batterie de façon amovible par rapport au cadre de châssis ou respectivement à un support de batterie, **caractérisé en ce que** le dispositif pour verrouiller le bloc de batterie présente au moins un premier levier (42) qui est monté autour d'un axe stationnaire par rapport au véhicule, et au moins un deuxième levier (50) qui est monté de façon pivotante sur le premier levier (42) et réalisé tellement qu'il saisit de façon serrante au moins une surface de paroi du bloc de batterie à l'aide d'au moins un coussin (54).

2. Chariot élévateur selon la revendication 1, **caractérisé en ce que** les leviers premier et deuxième forment une fermeture à genouillère dans laquelle le premier levier est pivoté au dessus du point mort de la fermeture à genouillère quand le deuxième levier est dans la position de verrouillage, que une paroi latérale (14) peut être attachée dans une extrémité du support de batterie (10) qui tient un élément de palier (16) dans son extrémité supérieure
dans lequel le premier levier (42) est monté de façon pivotante, l'élément de palier (16) présente une surface d'arrêt (28, 30), le deuxième levier (50) est guidé dans l'élément de palier (16) de sorte que dans la position de verrouillage, la portion de verrouillage saisit à partir de l'intérieur la partie supérieure de la paroi frontale de façon serrante, et est pivoté si loin vers le haut dans la position de déverrouillage que le bloc de batterie (12) peut être déplacé de la paroi latérale (14) au moins dans la direction horizontale.

3. Chariot élévateur selon la revendication 1 ou 2, **caractérisé en ce que** l'au moins un coussin (54) est fait d'un matériel élastomère.

4. Chariot élévateur selon l'une quelconque des revendications 1 à 3, **caractérisé en ce que** une broche de palier (46) pour le logement du deuxième levier (50) s'engrène dans une fente en forme d'arc (48) de l'élément de palier (16).

5. Chariot élévateur selon l'une quelconque des revendications 1 à 4, **caractérisé en ce que** l'élément de palier (16) présente une portion de limitation (62), contre laquelle une portion de butée du deuxième levier (50) vient en engagement quand le deuxième levier (50) est mis en la position de déverrouillage.

6. Chariot élévateur selon la revendication 5, **caractérisé en ce que** la portion de limitation est une portion de crochet (60) et la portion de butée est une broche de butée ou de limitation (62).

7. Chariot élévateur selon l'une quelconque des revendications 1 à 6, **caractérisé en ce que** une portion de guidage est pourvue dans l'élément de palier (16), qui coopère avec une surface de guidage du deuxième levier (50) dans une zone de pivotement du deuxième levier près de la position de déverrouillage, afin de pivoter la portion de verrouillage librement à travers de l'arête supérieure de la paroi frontale du bloc de batterie.

8. Chariot élévateur selon l'une quelconque des revendications 1 à 7, **caractérisé en ce que** le deuxième levier (50) présente une portion de mâchoire angulaire (52) dans lequel la portion de verrouillage est attachée et qui présente deux bras de levier (56, 58) parallèlement distants l'un de l'autre, qui sont parallèlement articulés dans des bras de levier parallèlement distants l'un de l'autre du premier levier (50).

9. Chariot élévateur selon la revendication 1 et 8, **caractérisé en ce que** deux coussins (54) latéralement distants l'un de l'autre sont attachés dans la jambe verticale de la portion de mâchoire (52), qui chacun à la fois coopèrent avec une surface d'arrêt (28, 30) de l'élément de palier (16).

10. Chariot élévateur selon la revendication 8 ou 9, **caractérisé en ce que** une broche de limitation (66) s'étendant dans la direction vers la surface d'arrêt est disposée approximativement centralement dans la partie verticale de la portion de mâchoire (52), qui s'engrène dans une ouverture de transport (68) de la paroi frontale du bloc de batterie (12) quand le deuxième levier (50) est dans la position de verrouillage.
